(19) **Europäisches Patentamt**
**European Patent Office**
**Office européen des brevets**

(11) **EP 2 599 148 B1**

(12) **FASCICULE DE BREVET EUROPEEN**

(45) Date de publication et mention
de la délivrance du brevet:
**04.06.2014 Bulletin 2014/23**

(51) Int Cl.:
***H01M 4/62*** *(2006.01)*   ***H01M 4/136*** *(2010.01)*
***H01M 4/36*** *(2006.01)*   ***H01M 4/58*** *(2010.01)*
*H01M 10/052* *(2010.01)*

(21) Numéro de dépôt: **11749467.4**

(22) Date de dépôt: **13.07.2011**

(86) Numéro de dépôt international:
**PCT/FR2011/000419**

(87) Numéro de publication internationale:
**WO 2012/013872 (02.02.2012 Gazette 2012/05)**

(54) **ELECTRODE POUR ACCUMULATEUR AU LITHIUM**

**ELEKTRODE FÜR LITHIUMAKKUMULATOREN**

**ELECTRODE FOR LITHIUM ACCUMULATORS**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.07.2010 FR 1003193**

(43) Date de publication de la demande:
**05.06.2013 Bulletin 2013/23**

(73) Titulaire: **Commissariat à l'Énergie Atomique
et aux Énergies Alternatives
75015 Paris (FR)**

(72) Inventeurs:
• **GIROUD, Nelly
F-42100 Saint Etienne (FR)**

• **ROUAULT, Hélène
F-38420 Le Versoud (FR)**
• **SOLAN, Sébastien
F-38170 Seyssinet-Pariset (FR)**

(74) Mandataire: **Talbot, Alexandre et al
Cabinet Hecké
Europole
10, rue d'Arménie - BP 1537
38025 Grenoble Cedex 1 (FR)**

(56) Documents cités:
**WO-A1-2009/117869    US-A1- 2007 026 313
US-A1- 2007 092 796**

**Description**

**Domaine technique de l'invention**

L'invention concerne une électrode pour accumulateur au lithium comportant du $LiFePO_4$ comme matériau électrochimiquement actif et un liant constitué par de l'acide polyacrylique.

L'invention concerne également l'utilisation d'une telle électrode dans un accumulateur au lithium ayant un mode de fonctionnement en puissance ou en énergie.

**État de la technique**

Les accumulateurs au lithium présentent des propriétés électrochimiques performantes, notamment en termes de potentiel et de stabilité de la capacité de charge et de décharge.

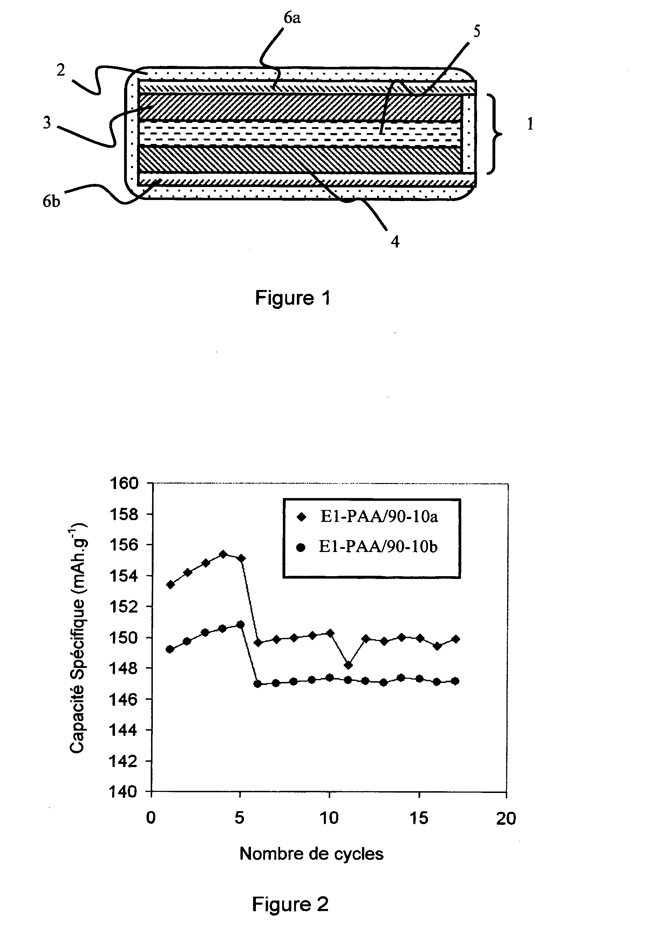

Comme représenté à la figure 1, les accumulateurs au lithium sont classiquement constitués par une cellule électrochimique 1 ou un empilement de cellules électrochimiques 1 dans un boîtier 2. Chaque cellule électrochimique 1 est formée par une électrode négative 3 et une électrode positive 4, séparées par un électrolyte 5. Chacune des électrodes positive et négative, respectivement 3 et 4, est en contact avec un collecteur de courant, 6a ou 6b, qui assure le transport des électrons vers un circuit électrique extérieur (non représenté). Selon le type d'accumulateur au lithium, l'électrolyte 1 peut se présenter sous une forme solide, liquide ou sous forme d'un gel.

Les électrodes 3 et 4, sont généralement réalisées par enduction d'une encre contenant le matériau électrochimiquement actif sur le collecteur de courant, 6a ou 6b. Le matériau électrochimiquement actif est généralement dispersé dans un solvant organique ou aqueux. L'étape d'enduction est classiquement suivie par le séchage de l'ensemble encre/collecteur pour évacuer le solvant contenu dans l'encre. L'électrode, 3 et 4, ainsi obtenue adhère au collecteur de courant, 6a ou 6b.

L'encre est généralement formée par un mélange du matériau électrochimiquement actif pulvérulent, d'un liant et d'un conducteur électronique. Le liant assure la tenue mécanique de l'électrode, 3 ou 4, et améliore l'interface entre l'électrode, 3 ou 4, et l'électrolyte 5.

Le conducteur électronique est utilisé pour améliorer la conductivité électronique des électrodes, 3 et 4.

L'épaisseur d'enduction définit le grammage de l'électrode, 3 ou 4. On entend par grammage la masse du matériau électrochimiquement actif par unité de surface. À partir de la capacité spécifique du matériau actif constituant l'électrode et du grammage obtenu, on peut calculer la capacité surfacique de l'électrode, exprimée en $mAh.cm^{-2}$.

L'électrode, 3 ou 4, ainsi formée est comprimée ou calandrée puis découpée sous forme de pastilles d'électrode avant son montage dans l'accumulateur au lithium, typiquement un format pile bouton.

La compression ou le calandrage modifie la porosité de l'électrode, 3 ou 4, et intervient notamment sur la mouillabilité de l'électrode vis-à-vis de l'électrolyte 5 et la conduction électronique de l'électrode, 3 ou 4.

La composition de l'encre, notamment le pourcentage en matériau électrochimiquement actif change en fonction de l'application visée.

Ainsi, on distingue les formulations d'électrode pour accumulateur au lithium dit "de puissance" et celles pour accumulateur au lithium dit "d'énergie".

Les accumulateurs au lithium de puissance supportent des régimes de charge et de décharge élevées, par exemple des pulses de courant. En général, ce sont des accumulateurs qui embarquent peu de capacité et nécessitent des électrodes faiblement grammées, avec des capacités surfaciques peu élevées. Les électrodes utilisées sont fines, c'est-à-dire ayant une faible épaisseur sèche, et présentent un grammage de l'ordre de $1mAh.cm^{-2}$. Le pourcentage de matériau électrochimiquement actif est, peu élevé, généralement entre 82% et 88%. En revanche, le pourcentage de conducteur électronique est élevé afin de faciliter le transfert des électrons et éviter de limiter les performances de l'accumulateur au lithium du fait d'un transfert de charge lent.

Le tableau (1) répertorie ci-dessous les proportions des constituants d'une électrode d'accumulateur au lithium de puissance selon l'art antérieur.

**TABLEAU 1 :**

| Constituant de l'électrode | Gamme en pourcentage en poids (%) |
|---|---|
| Matériau électrochimiquement actif | 80-88 |
| Conducteur électronique | 8-10 |
| Liant polymère | 5-10 |

Les accumulateurs au lithium d'énergie sont des accumulateurs à forte capacité qui fonctionnent généralement à des régimes de charge et décharge allant de C/20 à C dans les cas les plus extrêmes. Ils requièrent des électrodes épaisses, fortement grammées, avec des capacités surfaciques élevées, c'est-à-dire supérieure ou égale à environ 2.3 $mAh.cm^{-2}$. Les capacités spécifiques pour les électrodes positives sont, avantageusement, supérieures ou égales à $4mAh.cm^{-2}$, de préférence, à $5mAh.cm^{-2}$. Le pourcentage de matériau électrochimiquement actif est élevé afin d'embarquer dans l'accumulateur au lithium une importante capacité. Le pourcentage de matériau électrochimiquement actif est, classiquement supérieur à 90 % et le pourcentage de conducteur électronique est faible.

Le tableau 2 répertorie ci-dessous les proportions des constituants d'une électrode d'accumulateur au lithium d'énergie selon l'art antérieur.

**TABLEAU 2**

| Constituant de l'électrode | Gamme en pourcentage en poids (%) |
|---|---|
| Matériau actif | 90-96 |
| Conducteur électronique | 1,5 - 4 |
| Liant polymère | 2-6 |

À titre d'exemple, le tableau (3) ci-dessous répertorie différentes formulations d'électrodes classiquement utilisées dans des accumulateurs au lithium ainsi que leur application correspondante.

**TABLEAU 3**

| Matériau d'électrode | Pourcentage de matière active | Pourcentage de liant polymère | Pourcentage de conducteur électronique | Application Puissance/Énergie |
|---|---|---|---|---|
| $C_{graphite}$ | 96 % | 2 % | 2 % | Énergie |
| $Li_4Ti_5O_{12}$ | 82 % | 6 % | 12 % | Puissance |
| $LiFePO_4$ | 90 % | 6 % | 4 % | Énergie |

Les liants pour électrode couramment utilisés à l'heure actuelle sont des liants polymère solubles dans les solvants organiques tels que le polyvinylidène fluorure, noté PVDF. Le solvant organique est, généralement, la N-méthyl-2-pyrrolidone, noté NMP. Outre le coût élevé du PVDF et de la NMP, le procédé de fabrication d'une électrode par voie organique présente le désavantage d'utiliser un solvant organique combustible, volatile, inflammable et toxique. En effet, la NMP est classée comme composé Cancérigène Mutagène Reprotoxique (CMR) dont l'usage nécessite la mise en place de conditions de manipulation particulières.

Des liants polymères solubles dans un solvant aqueux ont été proposés pour remédier aux inconvénients du PVDF. En particulier, les recherches se sont orientées vers la carboxyméthyle cellulose, notée CMC, le caoutchouc nitrile (en anglais "nitrile butadiene rubber", noté NBR) et le caoutchouc styrène-butadiène (en anglais "styrene butadiene rubber", noté SBR).

Plus récemment, des électrodes comportant de l'acide polyacrylique (PAA) comme liant ont été proposées.

En particulier, le document US-A-2007026313 propose d'utiliser de l'acide polyacrylique dans une électrode négative à base de silicium afin de remédier au problème d'expansion et de contraction du matériau électrochimiquement actif à base de silicium, couramment rencontré dans le cadre des cycles de charges et de décharges d'une batterie contenant une telle électrode, et responsable in fine de la dégradation des performances électrochimiques de ladite batterie.

Par ailleurs, une électrode négative contenant du $LiFePO_4$ et de l'acide polyacrylique a également été proposée. On peut citer, à titre d'exemple, la demande internationale WO2009/117869 et l'article de Cai, Z.P. et al. ; "Preparation and performances of LiFePO4 cathode in aqueous solvent with polyacrylic acid as binder" (Journal of Power Sources, n°189, (2009), 547-551). En particulier, Cai et al. ont décrit des électrodes $LiFePO_4$ réalisées à partir de 90% en poids de $LiFePO_4$ enrobé de carbone (2% en poids) et 10% en poids d'acide polyacrylique ayant un poids moléculaire moyen de 1,000,000 $g.mol^{-1}$. Cai et al. ont mis en évidence les performances améliorées des électrodes préparées avec partir de l'acide polyacrylique comparativement à celles des électrodes préparées avec le PVDF.

**Objet de l'invention**

L'objet de l'invention a pour but une électrode d'accumulateur au lithium ayant des performances électrochimiques améliorées et une bonne tenue mécanique facilitant, notamment, l'impression de l'électrode, avec une bonne définition du motif imprimé.

L'objet de l'invention a également pour but de réaliser une électrode d'accumulateur au lithium économiquement viable et faisant intervenir des matériaux non polluants et inoffensifs pour l'environnement.

Selon l'invention, ce but est atteint par une électrode pour accumulateur au lithium et l'utilisation d'une telle électrode selon les revendications annexées.

En particulier, ce but est atteint fait que l'acide polyacrylique a un poids moléculaire moyen supérieur ou égal à 1 250 000 g.mol$^{-1}$ et strictement inférieur à 2 000 000 g.mol$^{-1}$ et par le fait que le pourcentage en poids de LiFePO$_4$ est supérieur à 90% et le pourcentage en poids d'acide polyacrylique est inférieur ou égal à 4%, lesdits pourcentages étant calculés par rapport au poids total de l'électrode.

Selon un mode de réalisation préférentiel, le pourcentage en poids de LiFePO$_4$ est supérieur à 94% et le pourcentage en poids d'acide polyacrylique est inférieur ou égal à 3%, lesdits pourcentages étant calculés par rapport au poids total de l'électrode.

Selon un développement de l'invention, le pourcentage en poids d'acide polyacrylique par rapport au poids total de l'électrode est inférieur à 3%.

**Description sommaire des dessins**

D'autres avantages et caractéristiques ressortiront plus clairement de la description qui va suivre de modes particuliers de réalisation de l'invention donnés à titre d'exemples non limitatifs et représentés aux dessins annexés, dans lesquels :

- La figure 1 représente, schématiquement et en coupe, un accumulateur au lithium selon l'art antérieur.
- La figure 2 représente, sur un même graphique deux courbes d'évolution de la capacité spécifique en fonction du nombre de cycles, de deux demi-piles Li métal/ électrode correspondant à une électrode selon un mode de réalisation particulier de l'invention,
- La figure 3 représente, sur un même graphique quatre courbes d'évolution de la capacité spécifique en fonction du nombre de cycles, de quatre demi-piles Li métal/ électrode correspondant à une électrode selon un mode de réalisation particulier de l'invention et à trois exemples comparatifs,
- La figure 4 représente, sur un même graphique cinq courbes d'évolution de la capacité spécifique en fonction du nombre de cycles de cinq demi-piles Li métal/électrode de porosité différente, selon un mode de réalisation particulier de l'invention,
- La figure 5 représente une courbe de voltammétrie cyclique réalisée sur une solution aqueuse d'acide polyacrylique entre un potentiel de 1 V et 6,5V vs. Li$^+$/Li.

**Description de modes particuliers de réalisation.**

Une électrode pour accumulateur au lithium comporte un matériau électrochimiquement actif et un liant constitué par de l'acide polyacrylique.

L'acide polyacrylique, noté PAA, est choisi parmi les acides polyacryliques ayant un poids moléculaire moyen supérieur ou égal à 1 250 000 g.mol$^{-1}$ et strictement inférieur à 3 000 000 g.mol$^{-1}$.

Le poids moléculaire moyen de l'acide polyacrylique est, de préférence, compris entre 1 250 000 g.mol$^{-1}$ et 2 000 000 g.mol$^{-1}$.

L'acide polyacrylique a, avantageusement, un poids moléculaire moyen supérieur ou égal à 1 250 000 g.mol$^{-1}$ et strictement inférieur à 2 000 000 g.mol$^{-1}$.

Le pourcentage de matériau électrochimiquement actif est supérieur ou égal à 90% en poids par rapport au poids total de l'électrode. Le pourcentage de matériau électrochimiquement actif est en outre, inférieur à 100% par rapport au poids total de l'électrode du fait de la présence essentielle du liant.

Le matériau électrochimiquement actif, noté MA, peut être un matériau d'électrode positive pour accumulateur Lithium-Ion, par exemple un matériau actif d'insertion ou d'intercalation de l'ion lithium Li$^+$. Les matériaux électrochimiquement actifs peuvent être soit des matériaux non lithiés comme, par exemple, les sulfures ou disulfures de cuivre (Cu ou CuS$_2$), les oxysulfures de tungstène (WO$_y$S$_z$), les disulfures de titane (TiS$_2$), les oxysulfures de titane (TiO$_x$S$_y$) ou les oxydes de vanadium (V$_x$O$_y$) soit des matériaux lithiés comme, par exemple, les oxydes mixtes à base de lithium tels que l'oxyde de lithium et de cobalt (LiCoO$_2$), l'oxyde de lithium et de nickel (LiNiO$_2$), l'oxyde de lithium et de manganèse (LiMn$_2$O$_4$), le pentoxyde de lithium et de vanadium (LiV$_2$O$_5$), le phosphate de lithium et de fer (LiFePO$_4$) ou l'oxyde de lithium, de manganèse et de nickel (LiNi$_{0,5}$Mn$_{1,5}$O$_4$).

Le matériau électrochimiquement actif peut également être un matériau d'électrode négative pour accumulateur au lithium, par exemple, du carbone graphite, noté C$_{gr}$, du lithium métallique ou un oxyde de lithium et de titane comme

du $Li_4Ti_5O_{12}$.

Le matériau électrochimiquement actif est, avantageusement, du $LiFePO_4$.

Le matériau électrochimiquement actif peut être constitué de particules de matériau actif enrobées d'un matériau conducteur électrique, notamment, du carbone obtenu selon tout procédé connu.

Selon un premier mode de réalisation particulier, le pourcentage en poids de matériau électrochimiquement actif est supérieur à 90% et le pourcentage en poids de liant est inférieur ou égal à 4%, lesdits pourcentages étant calculés par rapport au poids total de l'électrode.

Avantageusement, le pourcentage en poids de matériau électrochimiquement actif est supérieur à 94% et le pourcentage en poids de liant est inférieur ou égal à 3%, lesdits pourcentages étant calculés par rapport au poids total de l'électrode.

Le pourcentage en poids d'acide polyacrylique par rapport au poids total de l'électrode est, de préférence, inférieur à 3%.

Une électrode peut, par exemple, être constituée de 90% en poids de matériau électrochimiquement actif et 10% de liant, le pourcentage étant calculé par rapport au poids total de l'électrode.

L'électrode est préparée dans une solution aqueuse selon le procédé de fabrication décrit ci-après.

Une encre est initialement obtenue en mélangeant dans de l'eau distillée, le matériau électrochimiquement actif (MA) et de l'acide polyacrylique (PAA) dans un rapport du pourcentage en poids (%MA : %PAA) de 90:10.

Le liant a pour fonction d'assurer la tenue mécanique de l'électrode et d'améliorer l'interaction entre l'électrode et l'électrolyte de l'accumulateur au lithium.

L'encre est ensuite déposée sous forme d'une couche d'épaisseur variable sur une feuille généralement métallique constituant un collecteur de courant, pour former un ensemble encre/collecteur.

À titre d'exemple, une feuille de cuivre est classiquement utilisée pour une électrode en carbone graphite, en silicium ou carbure de silicium et une feuille d'aluminium pour les électrodes $LiFePO_4$ ou $Li_4Ti_5O_{12}$. Typiquement, les électrodes négatives sont enduites ou imprimées sur des collecteurs en cuivre et les électrodes positives sont enduites ou imprimées sur des collecteurs en aluminium.

Enfin, l'ensemble encre/collecteur est séché, selon tout procédé connu, pour évaporer l'eau et obtenir une électrode supportée sur le collecteur de courant.

L'électrode ainsi formée peut, ensuite, être comprimée ou calandrée afin d'améliorer la cohésion de l'électrode et d'augmenter la conductivité électronique de l'électrode. La compression ou le calandrage a pour effet de rapprocher les particules de matériau électrochimiquement actif entre-elles, améliorant ainsi la percolation électrique entre les particules du matériau électrochimiquement actif de l'électrode. En revanche, la compression ou le calandrage diminue simultanément la porosité de l'électrode. Or, l'électrode doit être suffisamment poreuse pour permettre l'imprégnation de l'électrolyte dans l'électrode. Le taux de compression ou de calandrage doit être ajusté afin d'obtenir une porosité intermédiaire et éviter l'obstruction des pores de l'électrode.

L'électrode est ensuite découpée sous forme de pastilles d'électrode selon tout procédé connu puis caractérisée. À titre d'exemple, des pastilles d'électrode sont obtenues avec des emporte-pièces de formes diverses et variées, par exemple, carrées ou rondes.

La capacité, en milliampère heure (mAh), de la pastille d'électrode est déterminée en fonction du poids du matériau électrochimiquement actif contenu dans la pastille, notée $m_{Ma}$.

Le poids du matériau électrochimiquement actif dans la pastille est calculé selon l'équation (1) suivante :

$$m_{MA} = (m_{tot} - m_{collecteur}) \times \%MA \qquad (1)$$

dans laquelle,
$m_{MA}$, $m_{tot}$ et $m_{collecteur}$ représentent, respectivement, le poids de MA, le poids total de la pastille d'électrode et le poids du collecteur de courant et, %MA le pourcentage en poids de MA dans l'électrode.

La capacité de la pastille, notée $C_{pastille}$ en mAh peut alors être calculée selon l'équation (2) suivante :

$$C_{pastille} = m_{MA} \times C_{MA} \times 1000 \qquad (2)$$

dans laquelle
$C_{MA}$ est la capacité spécifique du matériau électrochimiquement actif en $mAh.g^{-1}$.

L'épaisseur de l'enduction détermine, également, le grammage de l'électrode qui correspond à la capacité surfacique exprimée en $mAh.cm^{-2}$. Le grammage est le rapport de la capacité $C_{MA}$ sur la surface de la pastille d'électrode.

Les pastilles sont ensuite séchées sous vide à 80°C pendant 48H puis mise en boîte à gants avant le montage sur un accumulateur au lithium réalisé selon tout procédé connu.

Il a été montré que le choix du poids moléculaire moyen de l'acide polyacrylique dans la plage sélectionnée c'est-à-dire un poids moléculaire moyen $\geq$ 1 250 000 g.mol$^{-1}$ et <3 000 000 g.mol$^{-1}$ permet d'obtenir une meilleure tenue mécanique, notamment une meilleure adhésion de l'électrode sur le collecteur de courant.

Avantageusement, à l'intérieur de la gamme sélectionnée, le poids moléculaire moyen de l'acide polyacrylique est choisi inférieur à 2 500 000 g.mol$^{-1}$, de préférence encore inférieur à 2 000 000 g.mol$^{-1}$.

Il a également été constaté une absence de craquèlements et/ou de décollement de l'électrode dans la gamme de PAA sélectionnée. La combinaison de la plage de poids moléculaire du PAA sélectionnée décrite ci-dessus avec le choix de LiFePO$_4$ comme matériau électrochimiquement actif est, particulièrement, avantageuse. L'électrode décrite ci-dessus, en particulier comportant du LiFePO$_4$, présente une meilleure homogénéité, flexibilité et adhérence au collecteur de courant. Les accumulateurs au lithium comportant au moins une telle électrode ont, par conséquent, des performances électrochimiques améliorées.

**Exemple**

Une électrode sur un collecteur de courant en aluminium, notée E1-PAA/90-10, a été réalisée selon le procédé décrit ci-dessus avec un mélange 90:10 en poids de LiFePO$_4$ et d'un acide polyacrylique ayant un poids moléculaire moyen de 1 250 000 g.mol$^{-1}$.

LiFePO$_4$ constitue le matériau électrochimiquement actif et le PAA le liant de l'électrode.

L'électrode E1-PAA/90-10 est testée directement après séchage sans étape de compression ni de calandrage.

Des exemples comparatifs ont également été réalisés dans les mêmes conditions à l'exception du poids moléculaire moyen du PAA. En particulier, trois électrodes comparatives, C1-PAA/90-10, C2-PAA/90-10 et C3-PAA/90-10 ont été réalisées à partir d'acide polyacrylique ayant un poids moléculaire moyen, respectivement, de 250 000 g.mol$^{-1}$, 1 000 000 g.mol$^{-1}$ et 3 000 000 g.mol$^{-1}$.

Les propriétés mécaniques des électrodes ainsi obtenues et, notamment, leur qualité d'adhésion sur le collecteur de courant ont été évaluées sur la base de caractéristiques observables à l'oeil nu. En particulier, la qualité de l'électrode a été évaluée sur la base de ses propriétés de flexibilité c'est-à-dire l'aptitude de l'électrode avant découpage en pastilles de se tordre sans se rompre et la présence ou l'absence de décollement de l'électrode du collecteur de courant avant et/ou après découpage en pastilles. Enfin, la présence de craquèlements et/ou d'amas révélatrice de l'hétérogénéité de l'électrode a, également, été prise en considération pour évaluer la qualité d'adhésion de l'électrode LiFePO$_4$ sur le collecteur de courant en aluminium.

Les résultats ont été répertoriés dans le tableau (4) représenté ci-dessous dans lequel les signes "++", "+" et "-" correspondent à un ordre de grandeur permettant de quantifier la caractéristique observée.

**TABLEAU 4**

| Poids moléculaire moyen (g.mol$^{-1}$) /Réf. de l'électrode | Décollement | Craquèlement | Flexibilité | Présence d'amas |
|---|---|---|---|---|
| 250 000 / C1-PAA/90-10 | + | ++ | - | ++ |
| 1 000 000/ C2-PAA/90-10 | - | + | ++ | - |
| 1 250 000/ E1-PAA/90-10 | - | - | ++ | - |
| 3 000 000/ C3-PAA/90-10 | ++ | + | - | - |
| "++" : beaucoup ; "+" : moyen" ; "-" peu ou pas | | | | |

Les PAA à poids moléculaire moyen inférieur à 1 250 000 g.mol$^{-1}$ sont constitués par des chaînes de polymère qui ne sont pas suffisamment longues pour assurer, dans l'électrode, une bonne cohésion des particules de matériau actif comme LiFePO$_4$, entre-elles. En outre, les PAA à faible poids moléculaire moyen ont une concentration en fonctions carboxylique élevée. Les nombreuses fonctions acide carboxylique interagissent fortement entre-elles et avec le matériau constituant le collecteur de courant. Ces interactions provoquent l'apparition de craquèlements après séchage, dus à l'augmentation de la rigidité de l'électrode.

Les PAA à poids moléculaire moyen supérieur à 3 000 000 g.mol$^{-1}$ sont constitués par des chaînes de polymère suffisamment longues pour permettre la cohésion des particules de LiFePO$_4$. En revanche, le nombre de fonction carboxylique dans les PAA à fort poids moléculaire moyen n'est pas assez élevé pour assurer une bonne adhésion de l'électrode sur le collecteur de courant. En effet, la concentration en fonction carboxylique diminue proportionnellement au poids moléculaire moyen du PAA.

L'interaction entre l'électrode et le collecteur de courant est, par conséquent, moins forte. Le risque de décollement de l'électrode du collecteur de courant est plus important.

Les performances électrochimiques de l'électrode E1-PAA/90-10 ont été mesurées dans une demi-pile au lithium métallique et comparées à celles de l'électrode de Cai, Z.P et al. utilisant un PAA de 1 000 000 g.mol$^{-1}$. La mesure des performances électrochimiques de l'électrode C3-PAA/90-10 n'a pas pu être réalisée à cause de la mauvaise tenue mécanique de l'électrode rendant sa mise en forme impossible.

Une électrode au lithium métallique est utilisée comme électrode négative et électrode de référence dans la demi-pile. L'électrode négative est constituée par l'électrode E1-PAA/90-10.

Le grammage de l'électrode testée E1-PAA/90-10 est de 2,0 ± 0,1 mAh.cm$^{-2}$.

La demi-pile est montée avec un séparateur polymère macroporeux Celgard 2400 commercialisé par la société Celgard et un électrolyte LP10 commercialisé par la société Novolyte. L'électrolyte LP10 est une solution d'hexafluorophosphate de lithium (LiPF$_6$) à une concentration de 1 mol.L$^{-1}$ dans un mélange d'éthylène carbonate (EC), de propylène carbonate (PC) et de diméthyle carbonate (DMC). Les proportions EC/PC/DMC sont de 1:1:3 en volume et 2% en masse de vynilène carbonate (VC) ont également ajoutés au mélange EC/PC/DMC.

La demi-pile ainsi formée est soumise à un protocole A de charge et de décharge qui permet d'évaluer les performances de l'accumulateur pour un mode de fonctionnement en énergie. La stabilité cyclique de l'électrode est, par conséquent, testée au cours de plusieurs cycles de charge et de décharge. L'endurance de l'accumulateur est ainsi estimée. On entend par endurance la cyclabilité ou la durée de vie de l'électrode.

## Protocole A : Mode de fonctionnement en énergie

Le protocole A appliqué à la demi-pile décrite ci-dessus comporte les étapes successives suivantes :

- 5 cycles de charge et décharge à C/20-D/20,
- 995 cycles de charge et décharge au régime C/10-D/10.

Comme représenté à la figure 2, deux piles bouton, E1-PAA/90-10a et E1-PAA/90-10b, ont été réalisées dans les mêmes conditions et testées afin de consolider les résultats. La capacité spécifique des électrodes, E1-PAA/90-10a et E1-PAA/90-10b, s'élève, respectivement, à 149mAh.g$^{-1}$ et 147 mAh.g$^{-1}$. Les performances électrochimiques de l'électrode E1-PAA/90-10 sont meilleures que celles de l'électrode de Cai et al. dont la capacité spécifique s'élève uniquement à 135mAh.g$^{-1}$.

De façon surprenante, on constate que le choix du poids moléculaire moyen du PAA de l'électrode a un effet sur la tenue mécanique de l'électrode et, également, sur les performances de l'accumulateur contenant une telle électrode.

Selon un second mode de réalisation particulier, une électrode comporte un matériau électrochimiquement actif, le liant PAA et un conducteur électronique.

Le PAA est choisi parmi les PAA ayant un poids moléculaire moyen supérieur ou égal à 1 250 000g.mol$^{-1}$ et inférieur à 3 000 000g.mol$^{-1}$.

En particulier, le pourcentage de matériau électrochimiquement actif est supérieur à 90% en poids et le pourcentage de PAA est inférieur ou égal à 4% en poids, les pourcentages étant calculés par rapport au poids total de l'électrode.

L'électrode comporte, de préférence, plus de 94% en poids de matériau électrochimiquement actif et moins de 3% en poids de PAA.

Le pourcentage en poids de matériau électrochimiquement actif est, de préférence, supérieur à 94% et le pourcentage en poids d'acide polyacrylique est inférieur ou égal à 3%, lesdits pourcentages étant calculés par rapport au poids total de l'électrode.

L'électrode comporte, avantageusement, moins de 3% de conducteur électronique.

Le conducteur électronique peut contenir un ou plusieurs matériaux conducteurs électroniques. Le conducteur électronique est, de préférence, choisi parmi le noir de carbone, les fibres de carbone et un mélange de ceux-ci.

À titre d'exemples, des électrodes ont été préparées à partir de LiFePO$_4$ et d'un l'acide polyacrylique ayant un poids moléculaire moyen égal à 1 250 000 g.mol$^{-1}$, selon le procédé de fabrication décrit ci-après.

Un mélange pulvérulent est obtenu à partir de LiFePO$_4$, de noir de carbone et de fibres de carbone. Le noir de carbone et les fibres de carbone de type Vgcf (en anglais "Vapor grown carbon nanofiber") utilisés sont des produits commercialisés, respectivement, par la société Timcal sous le nom Super Plus (SP) et par la société Showa Denko sous le nom VgcF H.

Après homogénéisation des poudres, le PAA dissout à 5% en poids dans de l'eau distillée est ajouté au mélange pulvérulent. L'ensemble est, ensuite, mélangé à la spatule selon tout procédé connu. Un traitement aux ultrasons pendant quelques minutes est souhaitable pour supprimer les agrégats éventuellement formés. Ensuite, l'encre est mélangée par un mélangeur de type DISPERMAT durant 10 à 30 minutes. La vitesse de mélange est, par exemple, comprise entre 4000 tr.min$^{-1}$ et 6000 tr.min$^{-1}$.

L'encre est ensuite déposée sur un collecteur de courant en aluminium selon un procédé d'enduction classique, pour former un ensemble encre/collecteur. Préalablement à l'enduction, la feuille d'aluminium constituant le collecteur de courant peut, éventuellement, être traitée thermiquement à 650°C ou par traitement plasma selon des techniques conventionnelles afin d'améliorer l'adhésion de l'électrode sur le collecteur de courant. La texture de l'encre peut être modifiée en ajustant la quantité d'eau distillée ajoutée. La qualité de l'encre obtenue permet de réaliser une enduction à une vitesse d'enduction élevée, de l'ordre de 11 cm.s$^{-1}$, adaptée à une application industrielle.

L'ensemble encre/collecteur est ensuite séché dans une étuve à circulation d'air à une température de 60°C durant un temps compris entre 1 H et 24H. Après découpage selon tout procédé connu, on obtient des pastilles d'électrode prêtes à être montées dans un accumulateur au lithium.

Les caractéristiques des électrodes ainsi obtenues selon le second mode de réalisation particulier ainsi que leurs propriétés mécaniques, notamment leur qualité d'adhésion et d'homogénéité, sont répertoriées dans le tableau (5) suivant :

## TABLEAU 5

| Référence | E2-PAA/94-4 | E3-PAA/94-4 | E4-PAA/94-4 | | E5-PAA/94-4 | | E6-PAA/95-3 |
|---|---|---|---|---|---|---|---|
| MA | LiFePO$_4$ | | | | | | LiFePO$_4$ |
| %MA (% en poids) | 94 | | | | | | 95 |
| Conducteur électronique — SP (% en poids) | 1 | | | | | | 1 |
| Conducteur électronique — Vgcf (% en poids) | 1 | | | | | | 1 |
| %PAA (% en poids) | 4 | | | | | | 3 |
| Épaisseur d'enduction humide (µm) | 650 | 550 | 500 | 300 | 500 | 400 | 300 |
| Grammage (mAh.cm$^{-2}$) | 4.1 | 3.9 | 2,2 | 1,1 | 4 | 3.3 | 2.4 |
| Adhésion/homogénéité | ++ | ++ | ++ | ++ | ++ | ++ | ++ |

"++" bon ; "+" moyen ; "- " mauvais

Trois exemples comparatifs ont également été réalisés selon le second mode de réalisation particulier décrit ci-dessus à l'exception du fait que le PAA est remplacé par un liant polymère soluble dans l'eau constitué par un mélange de carboxyméthyle cellulose (CMC) et de caoutchouc nitrile (NBR), commercialisé par la société Aldrich ou Fluka pour la CMC et Dow Chemicals pour les caoutchoucs (NBR, SBR...).

Les caractéristiques des électrodes comparatives ainsi obtenues selon le second mode de réalisation particulier ainsi que leurs propriétés mécaniques, notamment leur qualité d'adhésion et d'homogénéité, sont répertoriées dans le tableau (6) suivant :

## TABLEAU 6

| Référence | | C1-CMC/NBR/90-6 | C2-CMC/NBR/92-4 | C3-CMC/NBR/94-2 |
|---|---|---|---|---|
| MA | | LiFePO$_4$ | LiFePO$_4$ | LiFePO$_4$ |
| %MA (% en poids) | | 90 | 92 | 94 |
| Conducteur électronique | SP (% en poids) | 2 | 2 | 2 |
| | Vgcf (% en poids) | 2 | 2 | 2 |
| CMC / NBR (% en poids) | | 6 (3-3) | 4 (2-2) | 2 (1-1) |
| Épaisseur d'enduction humide (µm) | | 450 | 450 | 450 |
| Grammage (mAh.cm$^{-2}$) | | 3,2 | 3,9 | 2,8 |
| Adhésion/homogénéité | | + | + | + |

"++" bon ; "+" moyen ; "- " mauvais

Toutes les électrodes contenant le PAA à 1 250 000g.mol$^{-1}$ comme liant présentent comme pour le premier mode de réalisation, une excellente adhésion au collecteur de courant, sans décollement avant et/ou après découpage en pastilles. La flexibilité et l'homogénéité des électrodes E2-PAA/94-4, E3-PAA/94-4, E4-PAA/94-4, E5-PAA/94-4 et E6-PAA/95-3 sont également très bonnes avec une absence de craquèlements.

La formulation des électrodes E2-PAA/94-4, E3-PAA/94-4, E4-PAA/94-4, E5-PAA/94-4 et E6-PAA/95-3 permet d'obtenir une électrode ayant un taux de grammage élevé, avantageusement, supérieur ou égal à 4mAh.cm$^{-2}$, sans affecter les propriétés d'adhérence et d'homogénéité de l'électrode. La définition du motif des pastilles d'électrode formées après découpage est également très bonne, quel que soit le grammage de l'électrode.

Les électrodes C1-CMC/NBR/90-6, C2-CMC/NBR/92-4 et C3-CMC/NBR/94-2 présentent des problèmes d'adhérence sur le collecteur de courant en aluminium après le découpage en pastilles et ont tendance à se décoller du collecteur de courant. Comparativement aux électrodes E2-PAA/94-4, E3-PAA/94-4, E4-PAA/94-4, E5-PAA/94-4 et E6-PAA/95-3, les électrodes C1-CMC/NBR/90-6, C2-CMC/NBR/92-4 et C3-CMC/NBR/94-2 sont, également, beaucoup moins homogènes avec l'apparition de quelques craquèlements.

Les performances électrochimiques des pastilles d'électrode E4-PAA/94-4 et des trois électrodes comparatives C1-CMC/NBR/90-6, C2-CMC/NBR/92-4 et C3-CMC/NBR/94-2 ont été évaluées et comparées dans une demi-pile Li métal/ Electrode à tester, selon le protocole A décrit précédemment.

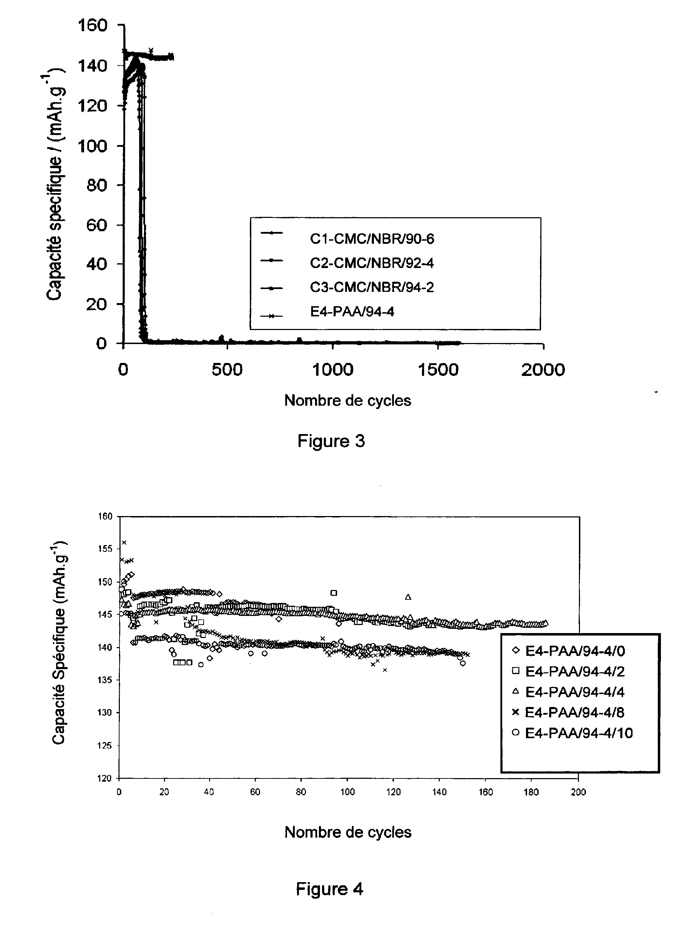

Comme représenté à la figure 3, les performances de l'électrode E4-PAA/94-4 sont nettement supérieures à celles des électrodes C1-CMC/NBR/90-6, C2-CMC/NBR/92-4 et C3-CMC/NBR/94-2 avec une capacité spécifique d'environ 149 mAh.g$^{-1}$ pour l'électrode E4-PAA/94-4 contenant le liant PAA à 1 250 000g.mol$^{-1}$ contre environ 140 mAh.g$^{-1}$ pour l'électrode CMC/NBR/90-6 affichant les meilleurs résultats parmi les trois électrodes comparatives contenant le liant CMC/NBR.

Par ailleurs, on observe pour les trois électrodes comparatives C1-CMC/NBR/90-6, C2-CMC/NBR/92-4 et C3-CMC/NBR/94-2 une chute brutale de la capacité spécifique après environ une centaine de cycles entraînant l'arrêt du fonctionnement de la demi-pile. Cet arrêt brutal traduit l'existence d'une réaction parasitaire qui inactive la demi-pile dans le cas d'un liant CMC/NBR.

Les accumulateurs au lithium utilisant une électrode avec un liant PAA telle que décrit ci-dessus sont stables et ont une durée de vie beaucoup plus longue que celle des accumulateurs comportant une électrode avec le liant CMC/NBR.

Alternativement, l'invention concerne l'utilisation de PAA comme liant d'électrode en combinaison avec un autre polymère soluble dans l'eau, pris par exemple parmi la carboximéthyl cellulose ou des émulsions de latex comme les caoutchoucs NBR et SBR. Le PAA est toujours en quantité majoritaire ou égale par rapport à l'autre polymère. Les tests effectués sont répertoriés dans les tableaux 7, 8 et 9 suivants :

**TABLEAU 7**

|  | F1 | masse (g) | masse pesée (g) | quantité d'eau | %en poids polymère | rapport liants |
|---|---|---|---|---|---|---|
| Matière active | 92 | 6.44 | 6.44 | 0 | 0 |  |
| SP | 2 | 0.14 | 0.14 | 0 | 0 |  |
| Vgcf (fibres) | 2 | 0.14 | 0.14 | 0 | 0 |  |
| CMC | 2 | 0.14 | 7 | 6.86 | 2 | 50% |
| NBR | 0 | 0 | 0 | 0 | 41 | 0% |
| PAA | 2 | 0.14 | 4 | 3.86 | 3.5 | 50% |

**TABLEAU 8**

|  | F2 | masse (q) | masse pesée (g) | quantité d'eau | % en poids polymère | rapport liants |
|---|---|---|---|---|---|---|
| Matière active | 92 | 6.44 | 6.44 | 0 | 0 |  |
| SP | 2 | 0.14 | 0.14 | 0 | 0 |  |
| Vgcf (fibres) | 2 | 0.14 | 0.14 | 0 | 0 |  |
| CMC | 1 | 0.07 | 3.5 | 3.43 | 2 | 25% |
| NBR | 0 | 0 | 0 | 0 | 41 | 0% |
| PAA | 3 | 0.21 | 6 | 5.79 | 3.5 | 75% |

**TABLEAU 9**

|  | F5 | masse (g) | masse pesée (g) | quantité d'eau | % en poids polymère | rapport liants |
|---|---|---|---|---|---|---|
| Matière active | 92 | 6.44 | 6.44 | 0 | 0 |  |
| SP | 2 | 0.14 | 0.14 | 0 | 0 |  |
| Vgcf (fibres) | 2 | 0.14 | 0.14 | 0 | 0 |  |
| CMC | 0 | 0 | 0 | 0 | 2 | 0% |
| NBR | 2 | 0.14 | 0.341 | 0.201 | 41 | 50% |
| PAA | 2 | 0.14 | 4 | 3.86 | 3.5 | 50% |

A chaque fois, des électrodes très adhérentes et flexibles sont obtenues. Aucune craquelure n'a été observée.

Selon un troisième mode de réalisation particulier, les électrodes E4-PAA/94-4 et E5-PAA/94-4 sont soumises à une étape de compression à différents tonnages pendant 30 secondes, après l'étape de découpage en pastilles. On obtient des pastilles d'électrode E4-PAA/94-4 et E5-PAA/94-4 ayant des porosités différentes.

Les porosités sont calculées ou mesurées selon une technique **de type BET ou porosité à mercure** et répertoriées dans le tableau (10) suivant.

**TABLEAU 10**

| Référence | Pression appliquée (Tonne) | Porosité obtenue (%) |
|---|---|---|
| E4-PAA/94-4/0 | 0 | 61 |
| E4-PAA/94-4/2 | 2 | 50 |

(suite)

| Référence | Pression appliquée (Tonne) | Porosité obtenue (%) |
|---|---|---|
| E4-PAA/94-4/4 | 4 | 39 |
| E4-PAA/94-4/8 | 8 | 30 |
| E4-PAA/94-4/10 | 10 | 25 |
| E5-PAA/94-4/0 | 0 | 55 |
| E5-PAA/94-4/2 | 2 | 45 |
| E5-PAA/94-4/4 | 4 | 37 |

**Protocole A : Mode de fonctionnement en énergie**

Les électrodes E4-PAA/94-4/0, E4-PAA/94-4/2, E4-PAA/94-4/4, E4-PAA/94-4/8 et E4-PAA/94-4/10 qui ont un grammage de 2,8 mAh.cm$^{-2}$, ont été testées dans une demi-pile Li métal/ E4-PAA/94-4 selon le même protocole A que pour le premier mode de réalisation décrit précédemment. Le protocole A permet d'évaluer les performances électrochimiques d'une électrode dans un accumulateur au lithium ayant un mode de fonctionnement en énergie.

Comme représenté à la figure 4, toutes les électrodes contenant le liant PAA à 1 250 000 g.mol$^{-1}$ présentent une bonne stabilité cyclique quelle que soit la porosité de l'électrode testée et une capacité spécifique supérieure ou égale à 140 mAh.g$^{-1}$.

On note également que bien que l'électrode E4-PAA/94-4/0 n'a pas subit de compression après séchage, elle permet néanmoins de restituer la capacité théorique de LiFePO$_4$ de l'ordre de 150 mAh.g$^{-1}$ en régime C/10. De plus, on constate que la perte de capacité spécifique par cycle reste faible, de l'ordre de 0,039 mAh.g$^{-1}$ par cycle.

Les résultats montrent des bonnes performances d'endurance en charge et décharge. En outre, l'étape de compression de l'électrode après séchage des pastilles d'électrode décrite ci-dessus peut, avantageusement, être supprimée du procédé de fabrication de l'électrode. En effet, les résultats obtenus ci-dessus montrent que cette étape de compression ou de calandrage n'est pas une étape essentielle dans le procédé de fabrication, pour l'obtention d'une capacité spécifique élevée.

**Protocole B : Mode de fonctionnement en puissance**

Les électrodes E5-PAA/94-4/0, E5-PAA/94-4/2 et E5-PAA/94-4/4 qui ont un faible grammage de 1,1 mAh.cm$^{-2}$, ont été testées dans une demi-pile Li métal/ E5-PAA/94-4 selon un protocole B destiné à évaluer la capacité de la demi-pile à supporter des régimes de charge et de décharge élevés, par exemple des pulses de courant. Le protocole B permet d'évaluer les performances électrochimiques d'une électrode dans un accumulateur au lithium ayant un mode de fonctionnement en puissance.

Le protocole B est composé des étapes successives suivantes :

- 2 cycles de charge et décharge à C/20-D/20 pour l'étape de formation,
- 5 cycles de charge et décharge au régime C/20-D/20,
- 5 cycles de charge et décharge à C/10-D/10,
- 5 cycles de charge et décharge au régime C/5-D/5,
- 5 cycles de charge et décharge à C/2-D/2,
- 5 cycles de charge et décharge au régime C-D,
- 5 cycles de charge et décharge à 2C-2D et,
- 5 cycles de charge et décharge à 10C-10D.

Les résultats obtenus sont répertoriés dans le tableau (8) suivant :

**TABLEAU 11**

| | Capacité Spécifique Moyenne (mAh.g$^{-1}$) | | |
|---|---|---|---|
| | **E5-PAA/94-4/0** | **E5-PAA/94-4/2** | **E5-PAA/94-4/4** |
| D/20 | 139.1 | 151.4 | 169.8 |
| D/10 | 137.2 | 151.3 | 153.3 |

(suite)

| | Capacité Spécifique Moyenne (mAh.g$^{-1}$) | | |
|---|---|---|---|
| | **E5-PAA/94-4/0** | **E5-PAA/94-4/2** | **E5-PAA/94-4/4** |
| D/5 | 130.2 | 143.9 | 137.5 |
| D/2 | 91 | 132.9 | 133.2 |
| D | 86.5 | 123.3 | 120.7 |
| 2D | 2.4 | 110.7 | 108.1 |
| 10D | - | 52.4 | 57.4 |

Bien que la formulation des électrodes testées corresponde à une formulation d'électrodes d'énergie c'est-à-dire comprenant un fort pourcentage en poids en matériau électrochimiquement actif et un faible pourcentage en poids en liant, les résultats montrent que les trois électrodes E5-PAA/94-4/0, E5-PAA/94-4/2 et E5-PAA/94-4/4 restent néanmoins efficaces pour des applications en puissance.

Les trois électrodes peuvent, avantageusement, être utilisées indifféremment dans un accumulateur au lithium ayant un mode de fonctionnement en puissance ou en énergie.

L'électrode décrite ci-dessus est particulièrement efficace dans un accumulateur Lithium-Ion.

Malgré l'absence d'étape de compression dans le procédé de fabrication de l'électrode, l'électrode E5-PAA/94-4/0 donne des résultats suffisamment bons pour envisager une application en puissance ou en énergie.

**Test de stabilité électrochimique**

Des tests électrochimiques ont été réalisés en voltammétrie cyclique sur une solution aqueuse contenant 3,5% en poids d'acide polyacrylique ayant un poids moléculaire moyen de 1 250 000 g.mol$^{-1}$. La gamme de potentiels utilisée est comprise entre 2,1V et 6,5V et la vitesse de balayage égale à 5 mV.s$^{-1}$.

Un montage classique en voltammétrie cyclique a été réalisé avec une électrode de travail et une contre électrode en platine ainsi qu'une électrode de référence au calomel saturé. Les potentiels ont ensuite été recalculés par rapport à une référence en Li/Li$^+$.

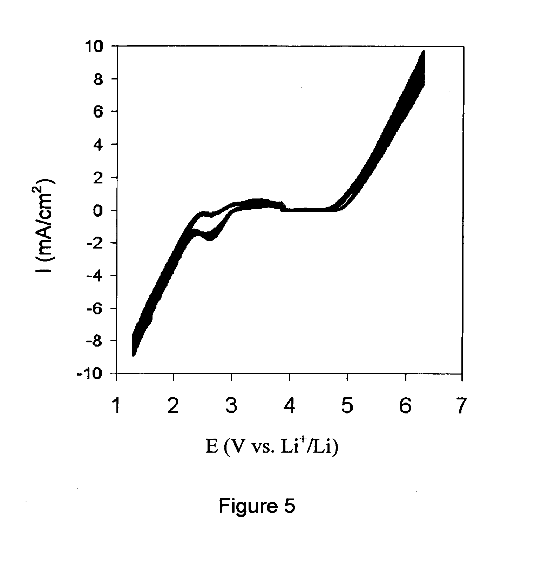

Comme illustré à la figure 5, le PAA est très stable du point de vue électrochimique. A l'exception d'une réaction d'oxydo-réduction totalement réversible qui se produit vers 2.4 V, on constate aucune dégradation du polymère aussi bien en réduction qu'en oxydation, sur l'ensemble des potentiels couvrant la gamme [1,2 ; 6,5] V vs Li/Li$^+$. En outre, on constate que les densités de courant sont également très faibles, en particulier, inférieures à 10 $\mu$A.cm$^{-1}$.

La fenêtre de stabilité très large du PAA, autorise l'utilisation du PAA comme liant de nombreux matériaux électrochimiquement actifs. Le PAA peut, par exemple, être utilisé avec du carbone graphite, $Li_4Ti_5O_{12}$ et, également, avec les matériaux spinelles à haut potentiel tels que le $LiNi_{0.5}Mn_{1.5}O_4$.

Le choix d'un PAA comme liant ayant un poids moléculaire moyen supérieur ou égal à 1 250 000 g.mol$^{-1}$ et inférieur à 3 000 000 g.mol$^{-1}$, combiné à la sélection d'un pourcentage de matériau électrochimiquement actif supérieur ou égal à 90% permet d'obtenir une électrode avec des performances électrochimiques améliorées et une meilleure tenue mécanique.

En particulier, contrairement aux électrodes de l'art antérieur, l'électrode selon l'invention présente une bonne homogénéité et une tenue mécanique permettant d'imprimer aisément l'électrode quelque soit la forme du motif, même pour des grammages d'électrode élevés, sans apparition de fissures ou de craquèlements, ni décollement de l'électrode du collecteur de courant.

Par ailleurs, l'électrode selon l'invention a une structure particulaire en réseau permettant une percolation électrique améliorée et une meilleure cohésion. Cette structure peut, avantageusement, compenser l'absence de compression ou de calandrage dans le procédé de fabrication de l'électrode.

Les accumulateurs au lithium comprenant au moins une électrode telle que décrit ci-dessus présentent une capacité spécifique élevée pouvant répondre à des régimes de charge et de décharge élevés.

L'électrode selon l'invention est remarquable en ce qu'elle peut être, avantageusement, utilisée aussi bien dans un accumulateur au lithium ayant un mode de fonctionnement en puissance qu'en énergie. L'électrode selon l'invention est particulièrement intéressante pour une application industrielle, en matière de coût et de rendement de production.

**Revendications**

1. Électrode pour accumulateur au lithium comportant du $LiFePO_4$ comme matériau électrochimiquement actif et un liant constitué par de l'acide polyacrylique, **caractérisée en ce que** l'acide polyacrylique a un poids moléculaire moyen supérieur ou égal à 1 250 000 g.mol$^{-1}$ et strictement inférieur à 2 000 000 g.mol$^{-1}$ et **en ce que** le pourcentage en poids de $LiFePO_4$ est supérieur à 90% et le pourcentage en poids d'acide polyacrylique est inférieur ou égal à 4%, lesdits pourcentages étant calculés par rapport au poids total de l'électrode.

2. Électrode selon la revendication 1, **caractérisée en ce que** le poids moléculaire moyen de l'acide polyacrylique est égal à 1 250 000 g.mol$^{-1}$.

3. Électrode selon l'une des revendications 1 et 2, **caractérisée en ce qu'**elle a un taux de grammage supérieur ou égal à 4 mAh.cm$^{-2}$.

4. Électrode selon l'une quelconque des revendications 1 à 3, **caractérisée en ce que** le pourcentage en poids de $LiFePO_4$ est supérieur à 94% et le pourcentage en poids d'acide polyacrylique est inférieur ou égal à 3%, lesdits pourcentages étant calculés par rapport au poids total de l'électrode.

5. Électrode selon la revendication 4, **caractérisée en ce que** le pourcentage en poids d'acide polyacrylique par rapport au poids total de l'électrode est inférieur à 3%.

6. Électrode selon l'une quelconque des revendications 1 à 5, **caractérisée en ce qu'**elle comporte un conducteur électronique.

7. Électrode selon la revendication 6, **caractérisée en ce que** le conducteur électronique est choisi parmi le noir de carbone, les fibres de carbone et un mélange de ceux-ci.

8. Électrode selon l'une des revendications 6 et 7, **caractérisée en ce qu'**elle comporte moins de 3% de conducteur électronique.

9. Utilisation d'une électrode selon l'une quelconque des revendications 1 à 8, dans un accumulateur au lithium ayant un mode de fonctionnement en puissance ou en énergie.

10. Utilisation selon la revendication 9, **caractérisée en ce que** l'accumulateur au lithium est un accumulateur Lithium-Ion.


**Patentansprüche**

1. Elektrode für eine Lithiumbatterie, die $LiFePO_4$ als elektrochemisch aktives Material und ein Bindemittel bestehend aus Polyacrylsäure enthält, **dadurch gekennzeichnet, dass** die Polyacrylsäure ein durchschnittliches Molekulargewicht von mehr als oder gleich 1 250 000 g.mol$^{-1}$ und strikt weniger als 2 000 000 g.mol$^{-1}$ aufweist und dass der Massenanteil von $LiFePO_4$ bei mehr als 90% liegt und der Massenanteil von Polyacrylsäure bei weniger als oder gleich 4% liegt, wobei diese Prozentsätze in Bezug auf das Gesamtgewicht der Elektrode berechnet sind.

2. Elektrode gemäß Anspruch 1, **dadurch gekennzeichnet, dass** das durchschnittliche Molekulargewicht von Polyacrylsäure gleich 1 250 000 g.mol$^{-1}$ beträgt.

3. Elektrode gemäß einem der Ansprüche 1 und 2, **dadurch gekennzeichnet, dass** sie ein Flächengewichtsverhältnis von mehr als oder gleich 4 mAh.cm$^{-2}$ aufweist.

4. Elektrode gemäß einem der Ansprüche 1 bis 3, **dadurch gekennzeichnet, dass** der Massenanteil von $LiFePO_4$ bei mehr als 94% liegt und der Massenanteil von Polyacrylsäure bei weniger als oder gleich 3% liegt, wobei diese Prozentsätze in Bezug auf das Gesamtgewicht der Elektrode berechnet sind.

5. Elektrode gemäß Anspruch 4, **dadurch gekennzeichnet, dass** der Massenanteil von Polyacrylsäure in Bezug auf das Gesamtgewicht der Elektrode weniger als 3% beträgt.

**6.** Elektrode gemäß einem der Ansprüche 1 bis 5, **dadurch gekennzeichnet, dass** sie einen elektronischen Leiter umfasst.

**7.** Elektrode gemäß Anspruch 6, **dadurch gekennzeichnet, dass** der elektronische Leiter aus Ruß, Kohlefaser und einer Mischung aus diesen ausgewählt ist.

**8.** Elektrode gemäß einem der Ansprüche 6 und 7, **dadurch gekennzeichnet, dass** sie weniger als 3% des elektronischen Leiters aufweist.

**9.** Verwendung einer Elektrode gemäß einem der Ansprüche 1 bis 8 in einer Lithiumbatterie mit einer Leistungs- oder Energiefunktionsart.

**10.** Verwendung gemäß Anspruch 9, **dadurch gekennzeichnet, dass** die Lithiumbatterie eine Lithiumionenbatterie ist.

**Claims**

**1.** An electrode for a lithium battery containing $LiFePO_4$ as electrochemically active material and a binder consisting of polyacrylic acid, **characterized in that** the polyacrylic acid has a mean molecular weight greater than or equal to 1,250,000 g.mol$^{-1}$ and strictly less than 2,000,000 g.mol$^{-1}$ and **in that** the weight percentage of $LiFePO_4$ is greater than 90% and the weight percentage of polyacrylic acid is less than or equal to 4%, said percentages being calculated with respect to the total weight of the electrode.

**2.** The electrode according to claim 1, **characterized in that** the mean molecular weight of the polyacrylic acid is equal to 1,250,000 g.mol$^{-1}$.

**3.** The electrode according to one of claims 1 and 2, **characterized in that** it has a grammage rate greater than or equal to 4 mAh.cm$^{-2}$.

**4.** The electrode according to any one of claims 1 to 3, **characterized in that** the weight percentage of $LiFePO_4$ is greater than 94% and the weight percentage of polyacrylic acid is less than or equal to 3%, said percentages being calculated with respect to the total weight of the electrode.

**5.** The electrode according to claim 4, **characterized in that** the weight percentage of polyacrylic acid with respect to the total weight of the electrode is less than 3%.

**6.** The electrode according to any one of claims 1 to 5, **characterized in that** it comprises an electronic conductor.

**7.** The electrode according to claim 6, **characterized in that** the electronic conductor is chosen from carbon black, carbon fibers and a mixture of the latter.

**8.** The electrode according to any one of claims 6 and 7, **characterized in that** it comprises less than 3% of electronic conductor.

**9.** The use of an electrode according to any one of claims 1 to 8, in a lithium battery having a power or energy operating mode.

**10.** The use according to claim 9, **characterized in that** the lithium battery is a Lithium-Ion battery.

Figure 1

Figure 2

Figure 3

Figure 4

Figure 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 2007026313 A

- WO 2009117869 A

### Littérature non-brevet citée dans la description

- **CAI, Z.P. et al.** Preparation and performances of LiFePO4 cathode in aqueous solvent with polyacrylic acid as binder. *Journal of Power Sources, n°189,* 2009, 547-551